# FASCICULE DE BREVET EUROPEEN

(11) **EP 0 764 565 B1**
(45) Date de publication et mention de la délivrance du brevet: **12.01.2000**
(21) Numéro de dépôt: 96114635.4
(22) Date de dépôt: 12.09.1996
(51) Int. Cl.: B60R 25/02

(54) **Antivol motorisé de direction de véhicule automobile**
Angetriebenes Lenkradschloss für Kraftfahrzeuge
Motorized vehicle steering lock

(30) Priorité: 21.09.1995 FR 9511186
(43) Date de publication de la demande: 26.03.1997
(73) Titulaire: VALEO SECURITE HABITACLE, 94000 Créteil (FR)
(72) Inventeur: Peyre, Jean, 78800 Houilles (FR); Demouy, Olivier, 94300 Vincennes (FR); Humbert, Arnaud, 94500 Champigny sur Marne (FR)
(74) Mandataire: Kohn, Philippe

(56) Documents cités:
- EP-A- 0 187 873
- EP-A- 0 219 002
- EP-A- 0 240 724
- DE-A- 2 115 133
- DE-C- 3 937 800
- DE-C- 4 422 436
- PATENT ABSTRACTS OF JAPAN vol. 8, no. 100 (M-295) [1537] , 11 Mai 1984 & JP-A-59 014551 (KOKUSAN KINZOKU), 25 Janvier 1984,

## Description

La présente invention concerne un antivol motorisé de direction de véhicule automobile.

Selon la conception la plus largement répandue, un antivol de direction de véhicule automobile comporte un pêne de verrouillage coulissant dont une extrémité est reçue dans un logement formé dans un organe rotatif de la colonne de direction, sous l'action de moyens élastiques de rappel, et il comporte des moyens d'escamotage du pêne, à l'encontre de l'effort de rappel qui lui est appliqué par les moyens élastiques, pour libérer la colonne de direction.

Selon la conception d'un antivol de direction du type mécanique, les moyens d'escamotage sont des moyens mécaniques sur lesquels le conducteur agit par l'intermédiaire d'un verrou commandé par une clé et dont l'organe de sortie, à travers une transmission mécanique, agit sur le pêne de verrouillage pour l'escamoter à l'encontre de ces moyens élastiques de rappel.

Selon une nouvelle conception connue décrite et représentée dans le document FR-A-2.710.599, il a déjà été proposé un procédé de contrôle d'un antivol de véhicule automobile, notamment avec un système d'accès par commande à distance comportant un système mécanique utilisant un moteur électrique tournant et dans lequel, quand le système de gestion d'accès au véhicule reconnaît un droit d'accès et une commande d'accès, un organe de commande produit un ordre d'actionnement qui excite le moteur électrique tournant. L'antivol change alors d'état en passant de l'état verrouillé à l'état déverrouillé.

Les moyens d'escamotage proposés dans ce document comportent, outre le moteur électrique tournant, des moyens de transmission par l'intermédiaire desquels l'arbre de sortie du moteur agit sur des mâchoires de verrouillage montées pivotantes et dont chacune est susceptible d'être reçue dans un cran de l'arbre de la colonne de direction.

Cette conception est satisfaisante, mais elle nécessite de faire appel à deux mâchoires articulées commandées par un tambour rotatif qui doivent chacune coopérer avec un cran constitué par exemple par une rainure axiale ou par une dent formée sur l'organe lié en rotation.

Il a également été proposé dans le document WO-A-83/03580 un antivol motorisé de direction comportant un pêne de verrouillage monté coulissant selon une direction radiale et qui est sollicité par des moyens élastiques de rappel vers sa position de verrouillage de la colonne de direction dans laquelle son extrémité libre est reçue dans une rainure axiale de l'organe rotatif, et du type comportant des moyens d'escamotage du pêne de verrouillage, à l'encontre de l'effort de rappel qui lui est appliqué par les moyens élastiques, qui comportent un moteur électrique tournant qui entraîne en rotation une came d'escamotage dont le profil de came coopère avec une surface d'entraînement formée sur le pêne sous l'action des moyens élastiques de rappel.

Selon la conception illustrée aux figures 7 et 8 de ce document, le pêne de verrouillage est un élément en forme de plaque en quatre parties qui s'étend dans un plan perpendiculaire à l'axe de rotation de l'organe rotatif de la colonne de direction et l'extrémité du pêne de verrouillage est conformée avec une forme complémentaire de celle des flancs de la rainure qui reçoit le pêne de verrouillage.

Pour augmenter le nombre de positions angulaires relatives de la colonne de direction par rapport au pêne de verrouillage dans lesquelles le verrouillage de l'antivol est rendu possible, ce document propose de partager le pêne de verrouillage en deux parties indépendantes et/ou de conformer son extrémité avec une encoche susceptible de recevoir une nervure qui délimite deux rainures axiales adjacentes de l'arbre rotatif.

Les conceptions proposées par ce document sont donc soit complexes à réaliser, ou aboutissent dans certains cas à assurer le verrouillage avec seulement une des deux parties du pêne qui présente alors une faible section transversale résistante en cas de tentative d'effraction par forçage en rotation de la colonne de direction.

Le document DE-C1-4.422.436 comportant les caractéristiques du préambule de la revendication 1, propose un antivol motorisé du type mentionné précédemment qui remédie à ces inconvénients et dans lequel l'extrémité libre du pêne est en forme de plaque parallèle à l'axe de rotation de l'organe rotatif, et l'axe de rotation des moyens électriques qui entraînent la came en rotation est perpendiculaire au plan de la plaque, dans lequel le pêne de verrouillage est réalisé sous la forme d'une plaque, et dans lequel la plaque comporte une fenêtre centrale à l'intérieur de laquelle est reçue la came d'escamotage qui comporte au moins un bord qui constitue la surface d'entraînement avec laquelle coopère le profil de came de la came d'escamotage.

Grâce une telle conception, l'organe rotatif de la colonne de direction peut comporter un grand nombre de rainures axiales adjacentes dont chacune est susceptible de recevoir l'extrémité en forme de plaque du pêne de verrouillage, ce dernier pouvant présenter une longueur axiale en prise importante permettant de résister de manière efficace aux tentatives d'effraction.

De plus, l'agencement de l'axe de rotation des moyens électriques d'entraînement en rotation de la came perpendiculairement à l'axe de rotation de l'organe rotatif de la colonne de direction permet d'agencer les différents composants de l'antivol dans un boîtier d'encombrement réduit et d'assurer plusieurs fonctions de commande et de commutation à l'aide de la came.

On constate toutefois que, dans ce document, le profil de came et ledit bord de la fenêtre sont des profils courbes, et que les moyens d'entraînement en rotation de la came sont constitués par un solénoïde électrique qu'il n'est pas possible de bloquer en rotation de manière fiable et économique. Il en résulte un risque important de retour accidentel du pêne en position de verrouillage.

Afin de remédier à cet inconvénient, l'invention propose un antivol du type mentionné précédemment, caractérisé en ce que la came est entraînée en rotation par un moteur électrique tournant, en ce que ledit bord de la fenêtre est un bord transversal rectiligne qui s'étend selon une direction perpendiculaire à la direction radiale de coulissement du pêne de verrouillage, et en ce que, afin d'éviter un retour accidentel du pêne de verrouillage vers sa position de verrouillage, le profil de came comporte un tronçon rectiligne qui, dans la position angulaire de la came correspondant à l'escamotage du pêne de verrouillage, coopère avec ledit bord transversal rectiligne de la fenêtre du pêne de verrouillage.

Selon d'autres caractéristiques de l'invention :
- en position angulaire de la came correspondant au verrouillage de l'antivol, le pêne est susceptible de se déplacer par rapport à la came ;
- l'antivol comporte un boîtier fixé transversalement sur un tube de colonne de direction du véhicule à l'intérieur duquel l'organe rotatif est monté tournant et qui comporte une lumière pour le passage du pêne de verrouillage et le boîtier comporte une fente pour le guidage en coulissement du pêne de verrouillage en forme de plaque, un logement qui reçoit la came d'escamotage et un logement qui reçoit le moteur électrique ;
- la fente de guidage est une fente borgne, et les moyens élastiques de rappel comportent au moins un ressort monté comprimé entre le fond borgne de la fente de guidage et un bord en vis-à-vis du pêne de verrouillage ;
- le corps du moteur est fixé sur la face supérieure d'une platine perpendiculaire à l'axe de rotation du moteur, la came est formée sur un tambour d'axe parallèle à l'axe de rotation du moteur et qui est monté tournant par rapport à la platine au-dessus de la face supérieure de cette dernière, et il est prévu des moyens de transmission en rotation entre l'arbre de sortie du moteur et l'arbre d'entraînement du tambour ;
- les moyens de transmission comportent un train d'engrenages ;
- les logements du boîtier débouchent dans sa face inférieure qui comporte un évidement qui reçoit la platine, et une face latérale du boîtier, perpendiculaire à sa face inférieure, comporte une cavité semi-cylindrique dans laquelle débouche la fente de guidage du pêne de verrouillage et qui reçoit une portion complémentaire du tube de colonne de direction ;
- le boîtier comporte un ensemble de capteurs qui coopèrent avec des rampes de commande formées sur le corps du tambour pour détecter des positions angulaires de la came par rapport au boîtier ;
- l'ensemble de capteurs est réalisé sous la forme d'un composant rapporté qui est monté dans une cavité du boîtier qui débouche radialement dans le logement cylindrique du boîtier dans lequel est monté le tambour qui porte la came ;
- la rainure axiale appartient à une série de rainures axiales de l'organe rotatif de la colonne de direction, réparties angulairement de manière régulière et qui sont délimitées par des nervures axiales en vis-à-vis ;
- le pêne de verrouillage est monté pivotant dans son plan de coulissement et ladite rainure axiale appartient à une série de rainures axiales de l'organe rotatif délimitées par deux séries de nervures axiales alternées angulairement, les nervures de chacune des deux séries s'étendent axialement en éloignement les unes des autres depuis un plan transversal perpendiculaire à l'axe de rotation, et l'axe de pivotement du pêne de verrouillage est situé sensiblement dans ce plan transversal ;
- le moteur électrique est commandé par inversion de son sens de rotation, et ii est prévu des moyens de butée qui déterminent des positions angulaires de la came correspondant au verrouillage et déverrouillage de l'antivol.

D'autres caractéristiques et avantages de l'invention apparaîtront à la lecture de la description détaillée qui suit pour la compréhension de laquelle on se reportera aux dessins annexés dans lesquels :
- la figure 1 est une vue en perspective éclatée des principaux composants d'un antivol électrique réalisé conformément aux enseignements de l'invention ;
- la figure 2 est une vue en perspective éclatée des principaux composants contenus dans le boîtier de l'antivol ;
- la figure 3 est une vue similaire à celle de la figure 2 sur laquelle les composants sont illustrés dans la position qu'ils occupent lorsqu'ils sont en position montée sur la platine et dans le boîtier ;
- la figure 4 est une vue en perspective à plus grande échelle du tambour comportant la came de commande du pêne et les pistes de commande des commutateurs ;
- la figure 5 est une vue de dessus à plus grande échelle du tambour illustré sur la figure 4 et sur laquelle le pêne de verrouillage est illustré, en silhouette, en position déverrouillée de la colonne de direction ;
- la figure 6 est une vue schématique en perspective du boîtier de l'antivol ;
- la figure 7 est une vue en section selon la ligne 7-7 de la figure 3 sur laquelle on a également représenté en silhouette le boitier du mécanisme d'antivol, le tube de colonne de direction et une bride de maintien du tube ;
- la figure 8 est une vue de détails en section du boîtier du mécanisme d'antivol dans la même position que celle dans laquelle il est illustré a la figure 7 ;
- la figure 9 est une vue latérale de gauche de la figure 8 ;
- les figures 10 et 11 sont des vues en section selon les lignes 10-10 et 11-11 de la figure 8 ;
- les figures 12 à 15 sont des schémas qui illustrent les différentes positions que le pêne de verrouillage est susceptible d'occuper par rapport a l'arbre de la colonne de direction, sous l'action de la came de commande de l'escamotage ;
- la figure 16 est une vue en perspective des principaux composants d'un second mode de réalisation d'un antivol motorisé réalisé conformément aux enseignements de l'invention ;
- la figure 17 est une vue du boîtier de l'antivol, en section selon la ligne 17-17 de la figure 16 ;
- la figure 18 est une vue de dessus selon la flèche F18 de la figure 17 ;
- la figure 19 est une vue en perspective et à grande échelle qui illustre le pêne de verrouillage et le moyeu rainuré de la colonne de direction ; et
- la figure 20 est une vue à grande échelle qui illustre une position particulière du pêne de verrouillage du second mode de réalisation illustré aux figures 16 à 19.

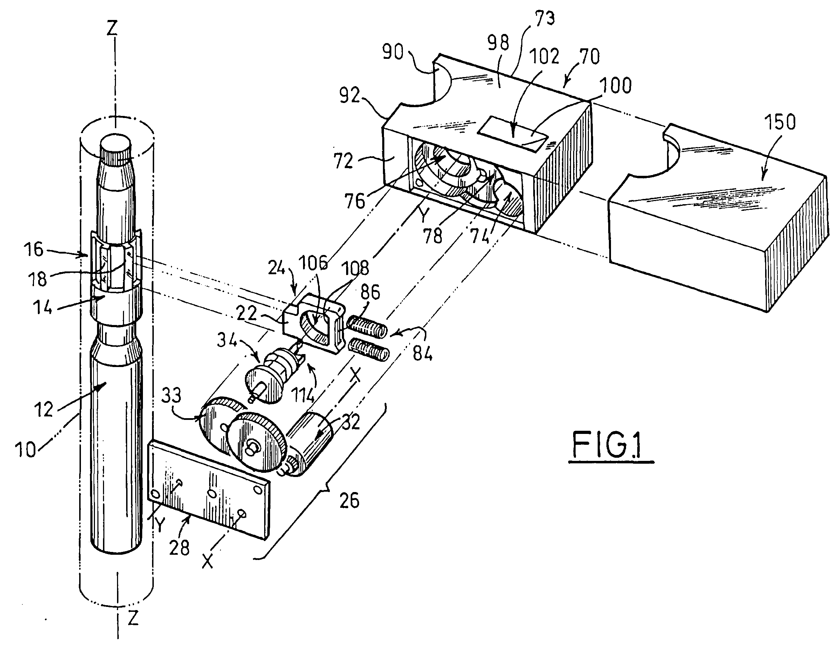

On a représenté en silhouette sur la figure 1 un tube 10 de colonne de direction d'un véhicule automobile a l'intérieur duquel est monté à rotation un arbre de colonne de direction 12.

L'arbre 12 est muni d'un manchon rainuré 14 qui comporte une série de rainures axiales parallèles 16 séparées par des nervures 18.

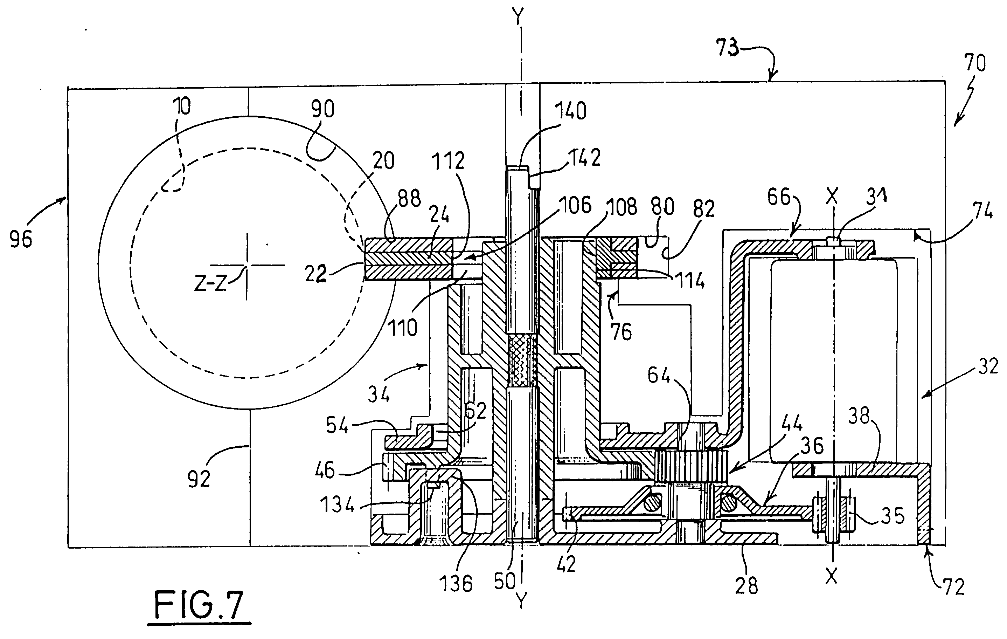

En regard du moyeu 14, le tube de colonne de direction 10 comporte une lumière 20 (voir figure 7) pour le passage de la partie d'extrémité 22 d'un pêne de verrouillage 24 appartenant à un mécanisme d'antivol 26 rapporté sur le tube de colonne de direction 10.

Le mécanisme d'antivol 26 est pour l'essentiel constitué par une plaque formant platine de fixation 28 dont la face supérieure 30 est prévue pour recevoir un moteur électrique 32 et un tambour de commande 34, ainsi que des moyens 33 de transmission entre ces deux éléments.

Le moteur 32 est Un moteur électrique tournant, à deux sans de rotation dont l'arbre de sortie 31 est perpendiculaire au plan de la platine 28 et dont l'extrémité inférieure porte un pignon denté 35.

La moteur 32 prend appui sur une portion surélevée 38 de la platine 28 et son pignon 35 passe au travers d'un trou 40 pour, en position montée et comme cela est illustrée sur la figure 7, coopérer avec la roue de grande dimension 36 du train d'engrenages 33 qui est elle-même liée en rotation avec un pignon denté 44 qui coopère avec la couronne dentée 46 formée a la partie inférieure du tambour 34.

La roue 36 comporte une denture 42 et, avec son pignon 44, elle est montée à rotation dans un trou 48 de la platine tandis que le tambour 34 comporte un arbre d'entraînement 50 qui est monté a rotation, autour d'un axe Y-Y parallèle a l'axe de rotation X-X de l'arbre 31 du moteur 32, dans un trou 52 de la platine 28.

Las composants sont maintenus et guidés en rotation sur la platine 28 par une plaque supérieure de maintien 54 gui prend appui sur le bord supérieur périphérique 56 de la platine 28 par rapport auquel elle est positionnée par des doigts 58 qui sont reçus dans des trous complémentaires 60 de la plaque 54.

La plaque supérieure 54 comporte également un grand trou circulaire 62 pour le passage de la partie principale du tambour 34 dont la couronne dentée 46 reste agencée entre la plaque 54 et la platine 28.

La plaque 54 comporte également un trou 64 pour le guidage an rotation de la partie supérieure du pignon denté 44. Comme on peut le voir notamment sur la figure 7, l'axe de rotation X-X de l'arbre 34 du moteur 32 et l'axe de rotation Y-Y du tambour 34 sont parallèles entre eux et perpendiculaires au plan de la platine 28.

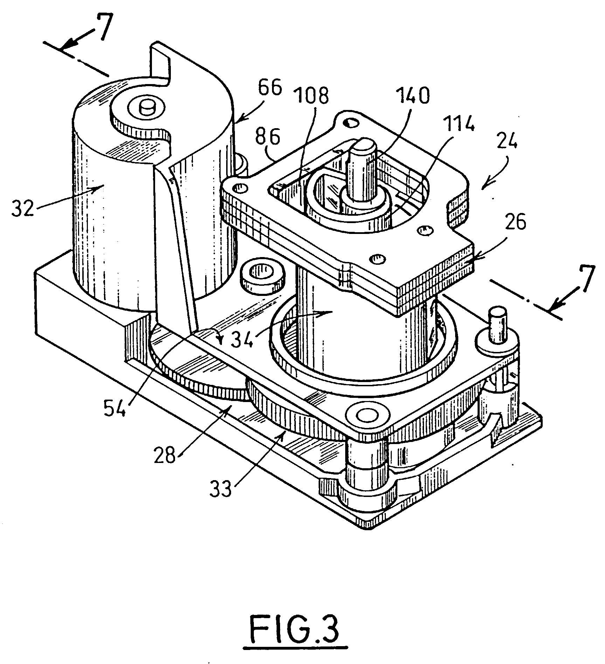

Enfin, le moteur 32 est bridé sur la platine 28 par une bride 66 réalisée venue de matière avec la plaque de fermeture 54. Ainsi, comme on peut le voir sur la figure 3, la platine 28, la plaque de fermeture 54, le moteur 32, le tambour 34 et la transmission par engrenage 33 constituent un sous-ensemble mécanique.

Sur les figures 3 et 7, on a illustré le pêne 24 dans la position qu'il occupe par rapport aux autres composants du mécanisme lorsque ceux-ci, ainsi que le pêne, sont en place dans le boîtier 70 illustré notamment aux figures 1, 7 et 6.

Le boîtier 70 présente une forme générale parallélépipédique rectangle qui est notamment délimitée par une face inférieure ouverte 72 et par une face supérieure parallèle 73.

Le boîtier 70 est une pièce moulée qui comporte un premier logement de forme générale cylindrique 74 qui débouche dans sa face inférieure 72 et qui est prévu pour recevoir le moteur 32 avec sa bride 66. Un second logement cylindrique 76 reçoit en rotation le corps du tambour 34. Une cavité inférieure 78 de forme générale rectangulaire reçoit la platine 28 avec la plaque de fermeture 54.

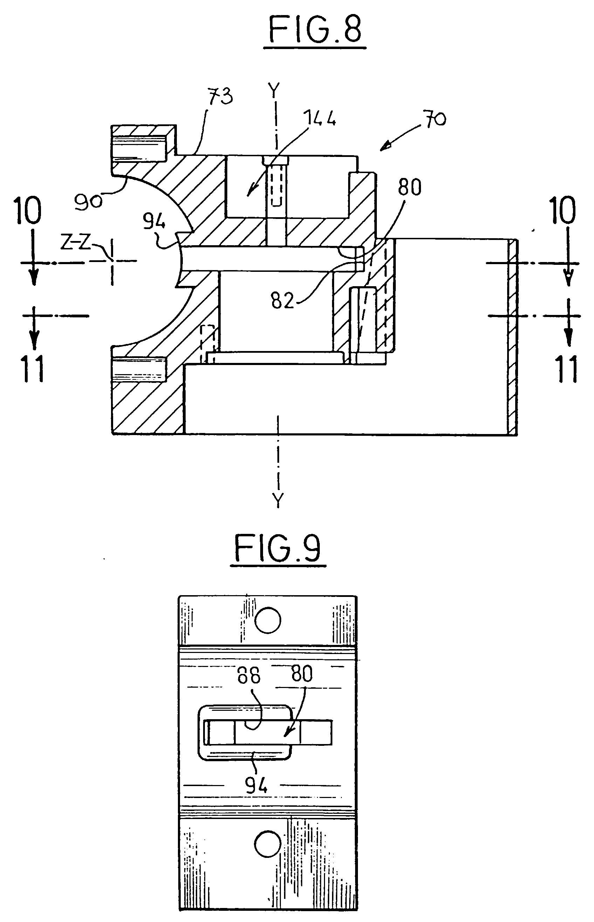

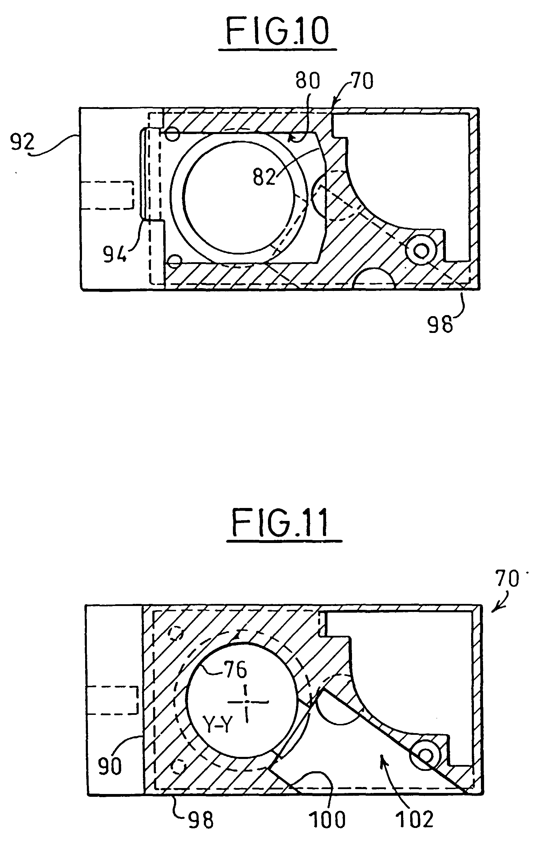

Le boîtier 70 comporte également une fente borgne 80 (voir figures 8 et 10) de forme générale plane qui s'étend dans un plan perpendiculaire aux axes X-X et Y-Y et qui est la fente dans laquelle le pêne 24 est monté coulissant.

La fente 80 est délimitée par un fond transversal 82 contre lequel prennent appui des extrémités en vis-à-vis d'une paire de ressorts hélicoïdaux de compression 84 (voir notamment la figure 1). Les autres extrémités des ressorts prennent appui contre un bord transversal extérieur en vis-à-vis 86 du pêne de verrouillage 24 pour solliciter ce dernier élastiquement en permanence en direction de sa sortie hors de la fente, c'est-à-dire de la droite vers la gauche en considérant la figure 7.

La fente 80 débouche par son extrémité 88 dans une cavité semi-cylindrique 90 d'axe Z-Z perpendiculaire aux axes X-X et Y-Y et parallèle au plan de coulissement du pêne 24 dans la fente 80.

La cavité 90 est formée dans la face latérale d'extrémité 92 du boîtier 70 qui est perpendiculaire à sa face inférieure 72. Comme on peut le voir en détails aux figures 8 et 9, la paroi 90 comporte une portion en relief 94 qui entoure la fente 80 et gui fait saillie pour être reçue dans la lumière 20 du tube 10 de manière à positionner ce dernier axialement et en rotation par rapport au boîtier 70.

Comme cela est schématisé sur la figure 7, le tube 10 est maintenu en position dans la cavité 90 par l'intermédiaire d'une bride 96 qui comporte des moyens de serrage, non représentés sur les figures, pour son assemblage avec la partie principale du boîtier 70.

La grande face latérale 98 du boîtier 70, perpendiculaire à sa face latérale d'extrémité 92, comporte une ouverture 100 donnant accès a une cavité 102 qui débouche transversalement à l'intérieur de la cavité 76 qui reçoit le tambour 34.

La cavité 102 est de section rectangulaire et elle est destinée à recevoir le corps d'un boîtier d'un ensemble de commutateurs (non représenté) qui peut être mis en place depuis la face latérale 98 de façon que ses commutateurs coopèrent avec des parties en vis-à-vis du tambour 34 qui seront décrite plus en détails par la suite.

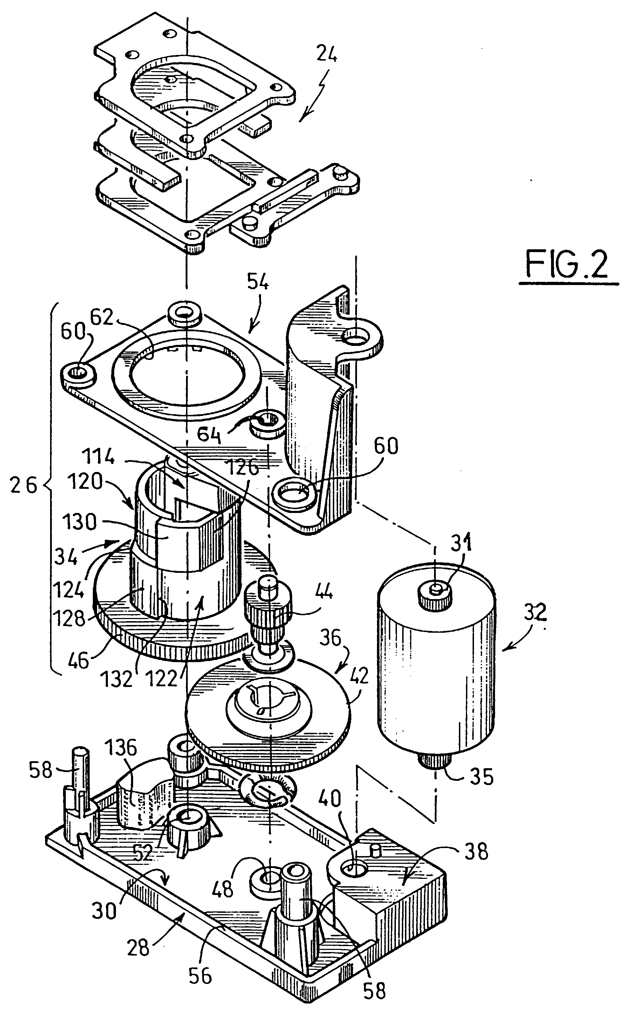

Comme on peut le voir aux figures 2, 3 et 7, le pêne 24 est de préférence réalisé sous la forme d'un empilage de quatre éléments qui, une fois assemblés comme cela est illustré aux figures 3 et 7, constituent un ensemble en forme générale de plaque susceptible de coulisser dans la fente 80 du boîtier 70.

Le pêne en forme de plaque 24 présente un contour sensiblement carré dans sa partie principale qui comporte une fenêtre 106.

La fenêtre 106 présente un contour sensiblement carré qui est délimité notamment par un bord transversal rectiligne 108 qui constitue le bord de commande du pêne au sens de l'invention.

La fenêtre 106 est également délimitée par deux bords latéraux parallèles 110 et par un bord transversal, appasé au bord transversal 108, en forme d'arc de cercle 112.

La partie principale en forme de plaque carrée du pêne de verrouillage 24 se termine par sa portion active d'extrémité 22 qui a la même épaisseur que l'ensemble de la plaque et qui présente une largeur transversale légèrement inférieure a la largeur de la partie principale.

En position assemblée, et comme cela est illustré notamment sur la figure 7, le pêne 24 s'étend dans un plan parallèle a l'axe de rotation Z-Z de l'arbre 12 de la colonne de direction de manière que la partie supérieure formant came 114 du tambour 34 soit reçue dans la fenêtre 106.

La partie active 116 du profil extérieur de la came 114 du tambour 34 est constituée pour l'essentiel par un enchaînement de tronçons d'arcs de cercles dont les rayons vont en s'agrandissant, à partir de l'axe de rotation Y-Y et depuis un premier point P1 jusgu'à un second point P2.

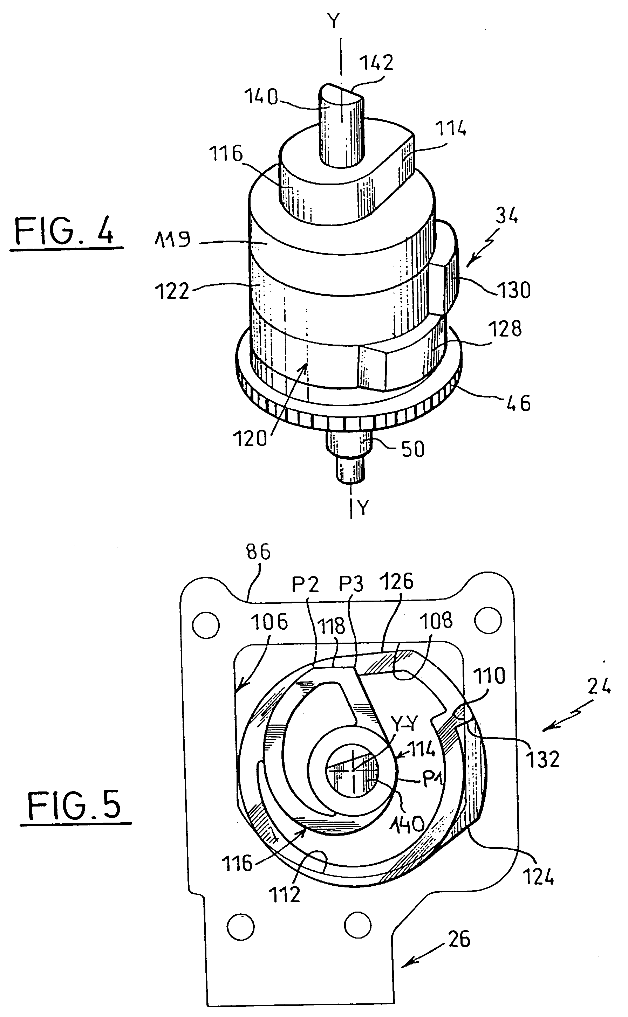

Dans le sens horaire en considérant la figure 5, le profil 116 se prolange par un tronçon rectiligne 118 réalisé sous la forme d'un méplat qui s'étend depuis le point P2 jusgu'à un point P3, le contour de la came 114 étant complété par un autre tronçon rectiligne qui relie entre eux les points P1 et P3.

En dessous de sa partie supérieure formant came 114, et en considérant la figure 4, le tambour 34 comporte un tronçon cylindrique 119 qui est un tronçon de guidage en rotation du tambour 34 et qui n'a pas de fonction de commande lors de la rotation du tambour 34 autour de son axe Y-Y.

En dessous du tronçon cylindrique 119, le tambour 34 comporte deux tronçons superposés 120 et 122 de profil général cylindrique centré autour de l'axe Y-Y et dont chacun comporte une rampe 124, 146 (voir figure 2), qui prolonge le profil cylindrique jusqu'a une surface de plus grand diamètre 128, 130 chacune pour la commande d'un commutateur (non représenté) monté dans le boîtier 70.

Les deux surfaces de plus grand diamètre 128 et 130 se terminent dans le même plan vertical 132 et elles correspondent chacune à la commande d'un commutateur de détection de l'une ou l'autre des deux positions angulaires maximales du tambour 34, en fonction du sens de rotation de ce dernier, le commutateur associé étant actionné avant que le tambour atteigne l'une ou l'autre de ses deux positions angulaires extrêmes du fait de l'extension angulaire des surfaces 128 et 130.

La position angulaire extrême dans l'un ou l'autre sens du tambour 34 est déterminée par une patte de butée 134 qui, comme on peut le voir sur la figure 7, est formée dans la face inférieure de la couronne dentée 46 agencée à la base du tambour 34 et qui coopère avec une butée en relief 136 formée sur la platine 28.

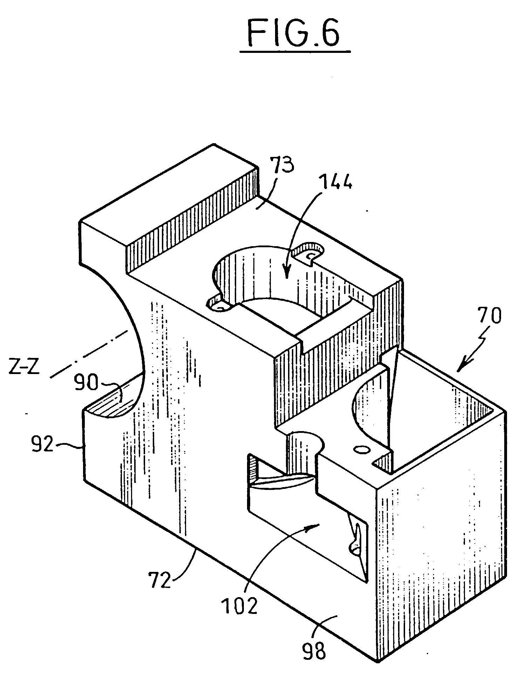

Comme on peut le voir aux figures 4 et 7, le tambour 34 comporte un arbre d'entraînement en rotation 50 dont l'extrémité supérieure 140 se prolonge au-delà de la came 114 et comporte un méplat 142 pour l'entraînement en rotation d'un commutateur rotatif (non représenté) qui est agencé dans une cavité 144 formée dans la face supérieure 73 comme cela est illustré en détail, notamment aux figures 6 et 8.

Le commutateur rotatif agencé dans la cavité 144 peut par exemple être un commutateur qui a une fonction d'inhibition d'un circuit électrique du véhicule, la fonction étant inhibée tant que l'antivol n'est pas sa position déverrouillée, c'est-à-dire tant que le tambour 34 dont la came 114 commande les déplacements du pêne de verrouillage 24, n'occupent pas une position angulaire déterminée par rapport au boîtier 70.

Une fois montés dans le boîtier 70, les composants du mécanisme d'antivol sont protégés et maintenus dans le boîtier grâce à une coiffe 150 qui recouvre le boîtier.

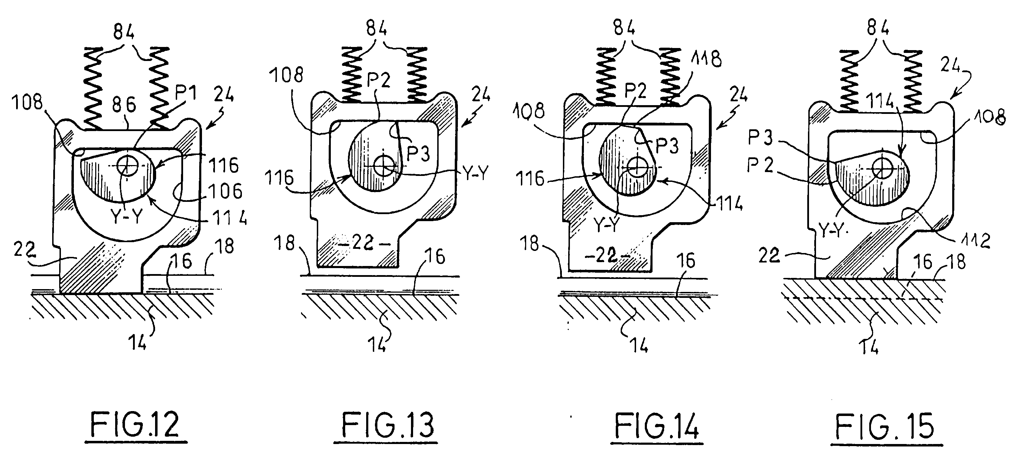

On décrira maintenant le principe de fonctionnement de la commande de l'escamotage du pêne 24 en se référant aux figures 12 à 15.

Sur la figure 12, on a représenté de manière schématique la position relative de la came 116 et du pêne de verrouillage 24 lorsque ce dernier est en position de verrouillage de l'arbre de colonne de direction 12.

Dans cette position, son bord d'entraînement 108 est sollicité en coopération avec le profil de came 116 sensiblement dans la zone du point P1 par les ressorts 84.

Dans cette position de verrouillage positif, l'extrémité 22 du pêne de verrouillage en forme de plaque est reçue dans une rainure 16 du moyeu cannelé 14 qui est lié en rotation à l'arbre de colonne de direction 12.

Pour provoquer le déverrouillage de la colonne de direction, la centrale de commande de l'antivol (non représentée) provoque la mise en rotation du moteur 32 dans un premier sens de manière que celui-ci, par l'intermédiaire de la transmission 33, provoque la rotation de la came 114 du tambour 34 dans le sens anti-horaire en considérant la figure 12.

Cette rotation se poursuit jusqu'à la position représentée à la figure 13 dans laquelle le bord d'entraînement 108 est en contact avec le point P2 du profil 116 de la came 114.

Dans cette position, l'extrémité 22 du pêne de verrouillage 24 est en retrait hors de toute rainure axiale 16 et le moyeu 14 avec l'arbre 12 sont libres de tourner autour de leur axe Z-Z.

Afin d'éviter un retour accidentel du pêne de verrouillage 24 vers sa position de verrouillage illustrée à la figure 12, la rotation de la came 114 se poursuit jusqu'à la position (illustrée à la figure 14) de déverrouillage "sécurisé" dans laquelle le bord transversal 108 de la fenêtre 106 est en appui contre le méplat 118 délimité par les points P2 et P3.

A partir de la position illustrée sur la figure 14, le déverrouillage de l'antivol se produit en inversant le sens de rotation du moteur 32 de manière que la came tourne dans le sens horaire en partant de la figure 14 jusqu'à ce qu'elle vienne à nouveau occuper sa position illustrée sur la figure 12.

Comme on l'a représenté sur la figure 15, il peut se produire que l'extrémité 22, à l'issue de la commande du déverrouillage, soit en appui contre la surface externe d'une nervure 18, et non pas dans le fond d'une rainure axiale 16.

Cette position est rendue possible grâce à la plus grande dimension séparant le bord transversal 108 du sommet du bord arrondi opposé 112 qui est supérieure à la largeur mesurée selon la direction de coulissement, de la came 114 dans cette position.

Le verrouillage de la colonne de direction est alors provoqué par le conducteur qui entraîne légèrement l'arbre de colonne de direction 12 en rotation jusqu'à ce qu'une rainure axiale 16 vienne en vis-à-vis de l'extrémité 22 du pêne de verrouillage 24 pour provoquer la pénétration de l'extrémité 22 dans la rainure 16 sous l'action des ressorts 84.

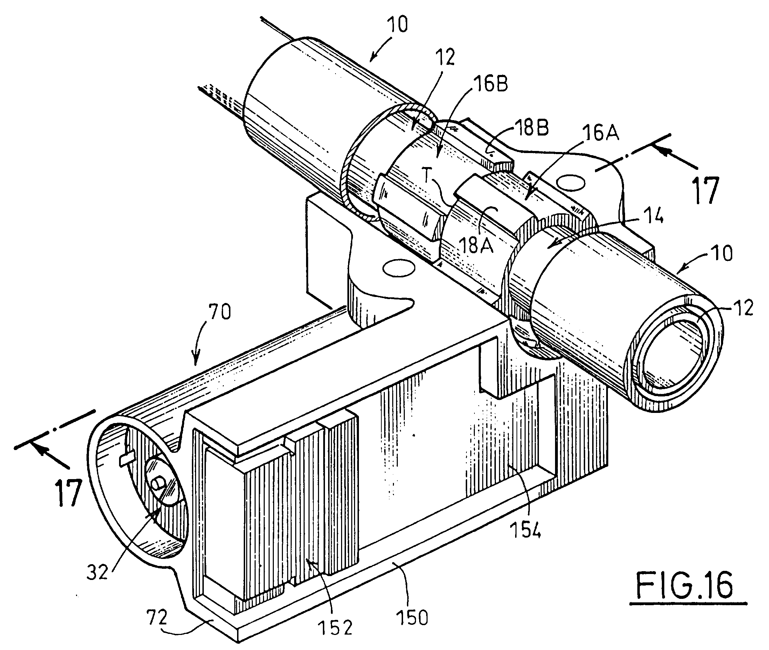

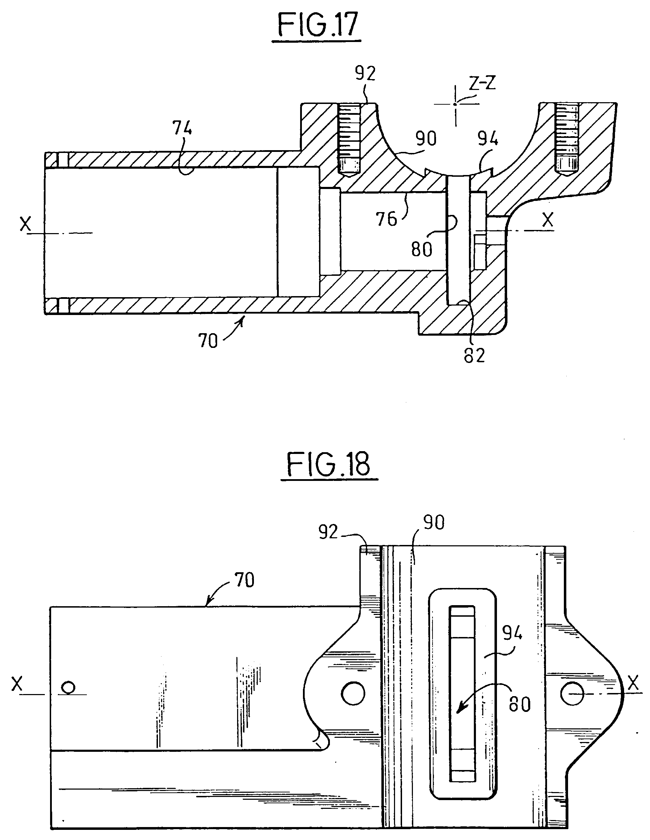

On décrira maintenant le second mode de réalisation illustré aux figures 16 à 20 sur lesquelles des composants identiques ou similaires à ceux décrits en référence aux figures 1 à 15 sont désignés par les mêmes chiffres de référence.

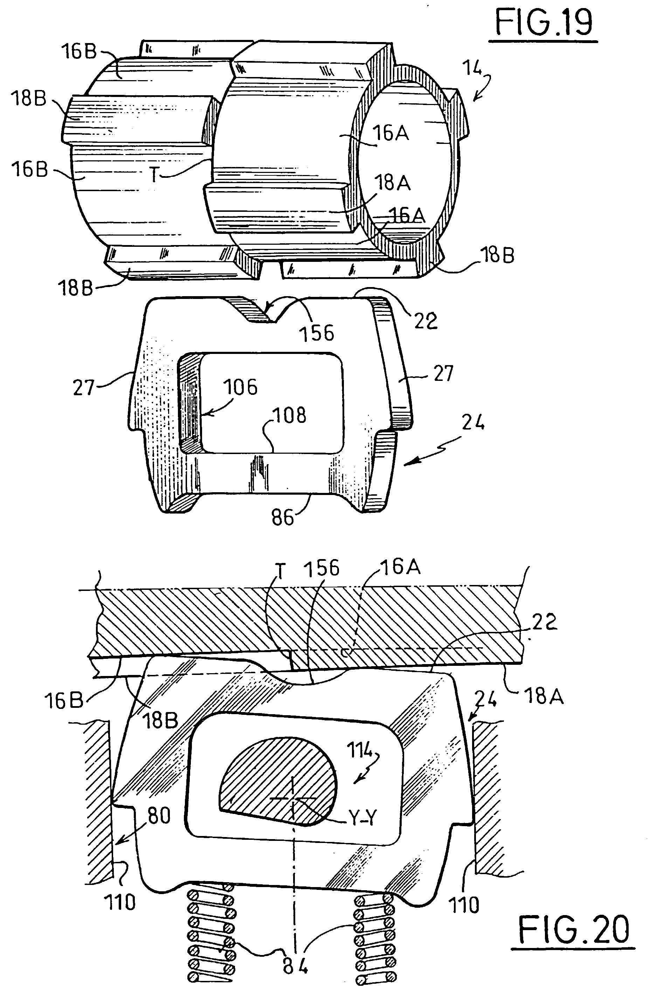

Comme on peut le voir aux figures 16 et 20, le boîtier 70 comporte deux logements coaxiaux, d'axe X-X dont l'un 74 reçoit le moteur électrique et dont l'autre 76 reçoit le tambour 34 (non représenté sur les figures), ces deux éléments étant liés en rotation.

Une face latérale ouverte 150 du boîtier 70 comporte également une cavité qui reçoit par exemple un connecteur 152 pour relier électriquement l'antivol au circuit de commande du véhicule ainsi qu'une carte à circuit imprimé 154 portant différents composants et notamment des commutateurs destinés à coopérer avec le tambour (non représenté) reçu dans le logement 76.

Comme on peut le voir aux figures 16 et 19, le moyeu cannelé 14 comporte deux séries de rainures axiales alternées 16A et 16B.

Les rainures de chacune des séries 16A et 16B sont séparées l'une de l'autre par des séries de nervures 18A, 18B espacées angulairement de manière régulière et d'un même pas.

Comme on peut le voir aux figures 16 et 19, les nervures 18A et 18B s'étendent axialement, en éloignement d'une des autres, depuis un plan transversal T qui passe par l'axe de rotation de la came 114.

Comme on peut le voir sur la figure 19, le pêne 24 ne comporte qu'une partie principale en forme de plaque de contour de forme générale carrée comportant une fenêtre 106 destinée à recevoir la came 114 (voir figure 20).

Le bord actif 22 du pêne 24 destiné à être reçu dans les rainures 16A, 16B comporte, sensiblement à milongueur, une encoche 156.

La coopération de la came 114 avec le bord transversal d'entraînement 108 de la fenêtre 106 est en tout point identique à celle qui a été décrite en référence au premier mode de réalisation.

Par contre, lors du verrouillage, différentes situations peuvent se produire.

Dans une première situation similaire à celle illustrée à la figure 12, la totalité du bord 22 est reçu simultanément dans un tronçon d'une rainure 16A et dans un tronçon en prolongement d'une rainure 16B.

Dans cette situation, le pêne de verrouillage est ainsi reçu pour une moitié entre une face latérale d'une nervure 18A et pour son autre moitié en vis-à-vis d'une face latérale d'une nervure 18B.

Si, d'une manière similaire à ce qui est illustré à la figure 15, la commande du verrouillage se produit lorsque le pêne est en regard de l'une ou l'autre de nervures 18A ou 18B, on aboutit à la situation illustrée à la figure 20.

Dans cet exemple, le pêne 24, c'est-à-dire son bord 22 est situé en regard de la surface externe d'une nervure 18A pour sa partie de droite en considérant la figure 20, tandis que sa partie de gauche est reçue dans le fond d'une nervure 16B.

Conformément aux enseignements de ce deuxième mode de réalisation, le pêne 24 est susceptible de pivoter dans son plan de coulissement entre les bords latéraux opposés 110 de la fente 80.

A cet effet, les bords latéraux opposés 27 de la plaque formant pêne de verrouillage 24 présentent un profil arrondi.

Ainsi, comme cela est illustré sur la figure 20, on est certain qu'au moins une partie du bord 22 du pêne de verrouillage 24 est toujours reçue dans le fond d'une rainure axiale en vis-à-vis d'un flanc latéral de cette dernière.

Si le conducteur provoque une rotation complémentaire de l'arbre de colonne de direction 12, le pêne 24 va normalement tomber complètement dans un tronçon de rainure 16A sous l'action des ressorts 84.

Toutefois, au cas où ce mouvement complémentaire ne se produirait pas, le verrouillage en rotation est quand même assuré du fait de la réception d'une partie du bord 22 du pêne de verrouillage 24 dans la rainure 16B.

Cette conception procure donc une sécurité encore améliorée par rapport à celle illustrée au premier mode de réalisation, dans la mesure où, à partir de la position illustrée à la figure 15 et au cas où le pêne de verrouillage 24 serait coincé dans sa fente 80, il serait possible de faire tourner librement la colonne de direction, ce qui n'est plus possible dans le cas du second mode de réalisation comme cela est schématisé à la figure 20.

## Revendications

1. Antivol motorisé de direction de véhicule automobile du type comportant un organe rotatif (12, 14) de colonne de direction (10) et un pêne de verrouillage (24) monté coulissant selon une direction radiale et qui est sollicité par des moyens élastiques (84) de rappel vers sa position de verrouillage de la colonne de direction dans laquelle son extrémité libre (22) est reçue dans une rainure axiale (16) de l'organe rotatif (12, 14), et du type comportant des moyens (114) d'escamotage du pêne de verrouillage, à l'encontre de l'effort de rappel qui lui est appliqué par les moyens élastiques (84), qui comportent des moyens électriques (32) qui entraînent en rotation une came d'escamotage (34, 114) dont le profil de came coopère avec une surface d'entraînement (108) formée sur le pêne (24) sous l'action des moyens élastiques de rappel (84), du type dans lequel l'extrémité libre (22) du pêne est en forme de plaque parallèle à l'axe (Z-Z) de rotation de l'organe rotatif et l'axe (X-X) de rotation des moyens électriques d'entraînement en rotation de la came est perpendiculaire au plan de la plaque (24, 26), et du type dans lequel le pêne de verrouillage (24, 22) est réalisé sous la forme d'une plaque qui comporte une fenêtre centrale (106) à l'intérieur de laquelle est reçue la came d'escamotage (114) et qui comporte au moins un bord (108) qui constitue la surface d'entraînement avec laquelle coopère le profil de came (116) de la came d' escamotage (114), caractérisé en ce que la came est entraînée en rotation par un moteur électrique tournant (32), en ce que ledit bord (108) de la fenêtre (106) est un bord transversal rectiligne qui s'étend selon une direction perpendiculaire à la direction radiale de coulissement du pêne de verrouillage (24), et en ce que, afin d'éviter un retour accidentel du pêne de verrouillage (24) vers sa position de verrouillage, le profil de came comporte un tronçon rectiligne (118) qui, dans la position angulaire de la came (114) correspondant à l'escamotage du pêne de verrouillage (24), coopère avec ledit bord transversal rectiligne (108) de la fenêtre du pêne de verrouillage (24).

2. Antivol selon la revendication 1, caractérisé en ce que, en position angulaire de la came (114) correspondant au verrouillage de l'antivol, le pêne (24) est susceptible de se déplacer par rapport à la came (114).

3. Antival selon l'une quelconque des revendications précédentes, caractérisé en ce qu'il comporte un boîtier (70) fixé transversalement sur un tube (10) de colonne de direction du véhicule à l'intérieur duquel l'organe rotatif (12, 14) est monté tournant et qui comporte une lumière (88) pour le passage du pêne (24, 22) de verrouillage, et en ce que le boîtier (70) comporte une fente (80) pour le guidage en coulissement du pêne de verrouillage en forme de plaque (24), un logement (76) gui reçoit la came d'escamotage (34, 114) et un logement (74) qui reçoit le moteur électrique (32).

4. Antivol selon la revendication 3, caractérisé en ce que la fente de guidage (80) est une fente borgne (82), et en ce que les moyens élastiques de rappel comportent au mains un ressort (84) monté comprimé entre le fond borgne (82) de la fente de guidage (80) et un bord en vis-à-vis (86) du pêne de verrouillage (24).

5. Antivol selon la revendication 4, caractérisé en ce que le corps du moteur (32) est fixé sur la face supérieure (30) d'une platine (28) perpendiculaire à l'axe (X-X) de rotation du moteur (32), en ce que la came (114) est formée sur un tambour (34) d'axe (Y-Y) parallèle à l'axe (X-X) de rotation du moteur (32) et qui est monté tournant par rapport à la platine (28) au-dessus de la face supérieure (30) de cette dernière, et en ce qu'il est prévu des moyens (33) de transmission en rotation entre l'arbre (31) de sortie du moteur (32) et l'arbre (50) d'entraînement du tambour (34).

6. Antivol selon la revendication 5, caractérisé en ce que les moyens de transmission (33) comportent un train d'engrenages (35, 42, 44, 46).

7. Antivol selon l'une des revendications 5 ou 6 prise en combinaison avec la revendication 5, caractérisé en ce que les logements (74, 76) du boîtier (70) débouchent dans sa face inférieure (72) qui reçoit la platine (28, 54), et en ce qu'une face latérale (92) du boîtier, perpendiculaire à sa face inférieure (72), comporte une cavité semi-cylindrique (90) dans laquelle débouche la fente (80) de guidage du pêne de verrouillage (24) et qui reçoit une portion complémentaire du tube (10) de colonne de direction.

8. Antivol selon l'une quelconque des revendications 4 à 7, caractérisé en ce que le boîtier (70) comporte un ensemble de capteurs qui coopèrent avec des rampes (126-132) de commande formées sur le corps du tambour (34) pour détecter des positions angulaires de la came (114) par rapport au boîtier (70).

9. Antivol selon la revendication 8, caractérisé en ce que l'ensemble de capteurs est réalisé sous la forme d'un composant rapporté qui est monté dans une cavité (102) du boîtier (70) qui débouche radialement dans le logement (76) du boîtier (70) dans lequel est monté le tambour (34) qui porte la came (14).

10. Antivol selon l'une quelconque des revendications précédentes, caractérisé en ce que la rainure axiale (16) appartient à une série de rainures axiales (16) de l'organe rotatif (12, 14) de la colonne de direction, réparties angulairement de manière régulière et qui sont délimitées par des nervures axiales (18) en vis-à-vis.

11. Antivol selon l'une quelconque des revendications 1 à 9, caractérisé en ce que le pêne de verrouillage (24) est monté pivotant dans son plan de coulissement, en ce que ladite rainure axiale appartient à une série de rainures axiales (16A, 16B) de l'organe rotatif délimitées par deux séries de nervures axiales (18A, 18B) alternées angulairement, en ce que les nervures (18A, 18B) de chacune des deux séries s'étendent axialement en éloignement les unes des autres depuis un plan transversal (T) perpendiculaire à l'axe de rotation (Z-Z), et en ce que l'axe de pivotement du pêne de verrouillage est situé sensiblement dans ce plan transversal (T).

12. Antivol selon l'une quelconque des revendications précédentes, caractérisé en ce que le moteur électrique (32) est commandé par inversion de son sens de rotation, et en ce qu'il est prévu des moyens de butée (134, 136) qui déterminent les positions angulaires de la came (14) correspondant au verrouillage et au déverrouillage de l'antivol.

## Claims

1. A motorised steering lock for a motor vehicle, of the type comprising a rotatable member (12, 14) of a steering column (10), and a locking bolt (24) which is mounted for sliding movement in a radial direction and which is urged by resilient return means (84) towards its position locking the steering column, in which its free end (22) is received in an axial groove (16) of the rotatable member (12, 14), and of the type having means (114) for withdrawing the locking bolt against the return force which is applied to it by the resilient means (84), wherein the bolt withdrawing means include electrical means (32) which drive in rotation a withdrawal cam (34, 114), the cam profile of which cooperates with a driving surface (108) formed on the bolt (24), under the action of the resilient return means (84), being further of the type in which the free end (22) of the bolt is in the form of a plate parallel to the axis (Z-Z) of rotation of the rotatable member, and the axis (X-X) of rotation of the electrical means for driving the cam in rotation is at right angles to the plane of the plate (24, 26), and of the type in which the locking bolt (24, 22) is made in the form of a plate which has a central window (106), within which the withdrawing cam (114) is received, and which has at least one edge (108) which constitutes the driving surface with which the cam profile (116) of the withdrawal cam (114) is in cooperation, characterised in that the cam is driven in rotation by a rotary electric motor (32), in that the said edge (108) of the window (106) is a straight transverse edge which extends in a direction at right angles to the radial direction of sliding of the locking bolt (24), and in that, in order to prevent accidental return of the locking bolt (24) to its locking position, the cam profile includes a straight portion (118) which, in the angular position of the cam (114) that corresponds to withdrawal of the locking bolt (24), cooperates with the said straight transverse edge (108) of the window in the locking bolt (24).

2. A steering lock according to Claim 1, characterised in that, in the angular position of the cam (114) corresponding to locking of the steering lock, the bolt (24) is adapted to be displaced with respect to the cam (114).

3. A steering lock according to either one of the preceding Claims, characterised in that it includes a casing (70) which is fixed transversely on a steering column tube (10) of the vehicle within which the rotatable member (12, 14) is mounted for rotation, and which includes a slot (88) for receiving the locking bolt (24, 22), and in that the casing (70) has a slot (80) for guiding in sliding movement the locking bolt which is in the form of a plate (24), a housing (76) which receives the withdrawing cam (34, 114), and a housing (74) which receives the electric motor (32).

4. A steering lock according to Claim 3, characterised in that the guide slot (80) is a blind slot (82), and in that the resilient return means comprise at least one spring (84) which is mounted in compression between the blind base (82) of the guide slot (80) and an edge (86) of the locking bolt (24) in facing relationship with it.

5. A steering lock according to Claim 4, characterised in that the body of the motor (32) is fixed on the upper face (30) of a base plate (28) at right angles to the axis (X-X) of rotation of the motor (32), in that the cam (114) is formed on a drum (34), the axis (Y-Y) of which is parallel to the axis (X-X) of rotation of the motor (32), and which is mounted for rotation with respect to the base plate (28) above the upper face (30) of the latter, and in that means (33) are provided for transmission of rotation between the output spindle (31) of the motor (32) and the drive shaft (50) of the drum (34).

6. A steering lock according to Claim 5, characterised in that the transmission means (33) comprise a gear train (35, 42, 44, 46).

7. A steering lock according to Claim 5, or Claim 6 taken in combination with Claim 5, characterised in that the housings (74, 76) of the casing (70) are open in its lower face (72) which receives the base plate (28, 54), and in that a side face (92) of the casing, at right angles to its lower face (72), includes a semi-cylindrical cavity (90) in which the slot (80) for guiding the locking bolt (24) is open, and which receives a complementary portion of the steering column tube (10).

8. A steering lock according to any one of Claims 4 to 7, characterised in that the casing (70) includes a set of sensors which cooperate with control ramps (126 to 132) formed on the body of the drum (34) for detecting angular positions of the cam (114) with respect to the casing (70).

9. A steering lock according to Claim 8, characterised in that the set of sensors is made in the form of an attached component, which is mounted in a cavity (102) of the casing (70) which is open radially into the housing (76) of the casing (70) in which the drum (34) that carries the cam (14) is mounted.

10. A steering lock according to any one of the preceding Claims, characterised in that the axial groove (16) is one of a set of axial grooves (16) of the rotatable member (12, 14) of the steering column, which are spaced apart circumferentially at regular intervals and which are bounded by facing axial ribs (18).

11. A steering lock according to any one of Claims 1 to 9, characterised in that the locking bolt (24) is mounted for pivoting movement in its plane of sliding movement, in that the said axial groove is one of a set of axial grooves (16A, 16B) of the rotatable member, which are defined by two sets of axial ribs (18A, 18B) in circumferential alternation, in that the ribs (18A, 18B) of each of the two sets extends axially from a transverse plane (T) at right angles to the axis of rotation (Z-Z), to be spaced from those of the other set, and in that the pivot axis of the locking bolt is situated substantially in the said transverse plane (T).

12. A steering lock according to any one of the preceding Claims, characterised in that the electric motor (32) is controlled by reversal of its direction of rotation, and in that abutment means (134, 136) are provided which determine the angular positions of the cam (14) corresponding to locking and unlocking of the steering lock.

## Patentansprüche

1. Motorgesteuertes Lenkradschloß für ein Kraftfahrzeug mit einem rotierenden Organ (12,14) der Lenksäule (10) und mit einem radial verschiebbaren Riegel (24), der von elastischen Rückstellelementen (84) in seine die Lenksäule verriegelnde Stellung gedrückt wird und dessen freies Ende (22) in eine axiale Nut (16) des drehbaren Organs (12,14) singreift, mit Elementen (114) für die Verschiebung des Riegels gegen die von den elastischen Elementen (84) erzeugte Rückstellkraft, wobei die Elements elektrische Mittel (32) umfassen, die einen Verschiebenocken (34,114) in Drehung versetzen, dessen Nockenprofil mit einer an dem Riegel (24) ausgebildeten Antriebsfläche (108) unter Einwirkung der elastischen Rückstellelemente (84) zusammenwirkt, wobei das freie Ende (22) des Riegels die Form einer Platte aufweist, die parallel zu der Drehachse (Z-Z) des drehbaren Organs angeordnet ist, und die Drehachse (X-X) der elektrischen Elements, die den Nocken in Drehung versetzt, senkrecht zu der Ebene der Platte (24,26) steht, und wobei der Riegel (24,22) in Form einer Platte verwirklicht ist, die in der Mitte ein Fenster (106) aufweist, in das der Verschiebenocken (114) eingreift und das mindestens einen Rand (108) besitzt, der die Antriebsfläche bildet, mit welcher das Nockenprofil (116) des Verschiebenockens (114) zusammenwirkt, dadurch gekennzeichnet, daß der Nocken durch einen Elektromotor (32) gedreht wird, daß es sich bei dem genannten Rand (108) des Fensters (106) um einen geradlinigen Querrand handelt, der sich in einer Richtung senkrecht zu der radialen Verschieberichtung des Riegels (24) erstreckt, und daß zur Verhinderung einer zufälligen Rückstellung des Riegels (24) in seine Verriegelungsstellung das Nockenprofil einen geradlinigen Abschnitt (118) aufweist, der in der winkligen Stellung des Nockens (114), die der herausgeschobenen Stellung des Riegels (24) entspricht, mit dem genannten geradlinigen Querrand (108) des Fensters des Riegels (24) zusammenwirkt,

2. Lenkradschloß nach Anspruch 1, dadurch gekennzeichnet, daß in der winkligen Stellung des Nockens (114), die der Verriegelung des Lenkradschlosses entspricht, der Riegel (24) gegenüber dem Nocken (114) verschiebbar ist.

3. Lenkradschloß nach einem der vorhergehenden Ansprüche, dadurch gekennzeichnet, daß das Lenkradschloß ein Gehäuse (70) umfaßt, welches quer auf einem Rohr (10) der Lenksäule des Fahrzeugs befestigt ist, in dessen Innerem das drehbare Organ (12,14) drehbar angeordnet ist, und welches eine Öffnung (88) für den Durchgang des Riegels (24,22) aufweist, und daß das Gehäuse (70) einen Schlitz (80) für die gleitende Führung des plattenförmigen Riegels (24), einen Sitz (76) zur Aufnahme des Verschiebenockens (34,114) und einen Sitz (74) zur Aufnahme des Elektromotors (32) enthält.

4. Lenkradschloß nach Anspruch 3, dadurch gekennzeichnet, daß es sich bei dem Führungsschlitz (80) um einen Blindschlitz (82) handelt, und daß die elastischen Rückstellelemente mindestens eine Feder (84) umfassen, die zusammengedrückt zwischen dem Blindboden (82) des Führungsschlitzes (80) und einem gegenüberliegenden Rand (86) des Riegels (24) angeordnet ist.

5. Lenkradschloß nach Anspruch 4, dadurch gekennzeichnet, daß das Gehäuse des Motors (32) auf der Oberfläche (30) einer Platte (28) befestigt ist, die senkrecht zu der Drehachse (X-X) des Motors (32) liegt, daß der Nocken (114) auf einer Trommel (34) angeordnet ist, deren Achse (Y-Y) parallel zu der Drehachse (X-X) des Motors (32) liegt und die gegenüber der Platte (28) oberhalb von deren Oberfläche (30) drehbar befestigt ist, und daß Drehantriebselemente (33) zwischen der Antriebswelle (31) des Motors (32) und der Antriebswelle (50) der Trommel (34) vorgesehen sind.

6. Lenkradschloß nach Anspruch 5, dadurch gekennzeichnet, daß die Antriebselemente (33) ein Zahnradgetriebe (35,42,44,46) umfassen.

7. Lenkradschloß nach einem der Ansprüche 5 oder 6 in Kombination mit Anspruch 5, dadurch gekennzeichnet, daß die Sitze (74,76) des Gehäuses (70) auf dessen Unterseite (72) enden, die eine Aussparung umfaßt, welche die Platte (28,54) aufnimmt, und daß eine senkrecht zur Unterseite (72) angeordnete Seitenfläche (92) des Gehäuses eine halbzylinderförmige Vertiefung 90) aufweist, in weicher der Führungsschlitz (80) des Riegels (24) endet und die einen ergänzenden Teil des Rohrs (10) der Lenksäule aufnimmt;

8. Lenkradschloß nach einem der Ansprüche 4 bis 7, dadurch gekennzeichnet, daß das Gehäuse (70) eine Reihe von Meßwertaufnehmern umfaßt, die mit Steuerrampen (126-132) zusammenwirken, welche auf dem Gehäuse der Trommel (34) angeordnet sind, um die winkligen Stellungen des Nockens (114) gegenüber dem Gehäuse (70) zu erfassen.

9. Lenkradschloß nach Anspruch 8, dadurch gekennzeichnet, daß sämtliche Meßwertaufnehmer in Form eines Anbauteiles ausgebildet sind, welches in einer radial an dem zylinderförmigen Sitz (76) des Gehäuses (70) endenden Vertiefung (102) des Gehäuses (70) angeordnet ist, in der sich die den Nocken (14) tragende Trommel (34) befindet.

10. Lenkradschloß nach einem der vorhergehenden Ansprüche, dadurch gekennzeichnet, daß die axiale Nut (16) zu einer Reihe von axialen Nuten (16) des drehbaren Organs (12,14) der Lenksäule gehört, die winklig auf regelmäßige Weise verteilt und durch axiale Rippen (18) voneinander getrennt sind.

11. Lenkradschloß nach einem der Ansprüche 1 bis 9, dadurch gekennzeichnet, daß der Riegel (24) in seiner Gleitebene schwenkbar angeordnet ist, daß die genannte axiale Nut zu einer Reihe von axialen Nuten (16A,16B) des drehbaren Organs gehört, die von zwei Reihen axialer, winklig abwechselnder Rippen (18A,18B) begrenzt werden, wobei sich die Rippen (18A,18B) jeder der beiden Reihen axial in einer Entfernung voneinander von einer Querebene (T) aus erstrecken, die senkrecht zu der Drehachse (Z-Z) liegt, und daß die Schwenkachse des Riegels im wesentlichen in dieser Querebene (T) liegt.

12. Lenkradschloß nach einem der vorhergehenden Ansprüche, dadurch gekennzeichnet, daß der Elektromotor (32) durch die Umkehr seiner Drehrichtung steuerbar ist und daß Anschlagelemente (134,136) vorgesehen sind, die für die der Verriegelung und der Entriegelung des Lenkradschlosses entsprechenden Winkelstellungen des Nockens (14) ausschlaggebend sind.
